# EUROPEAN PATENT SPECIFICATION

(11) **EP 1 050 546 B1**
(45) Date of publication and mention of the grant of the patent: **26.11.2003**
(21) Application number: 00202843.9
(22) Date of filing: 05.02.1996
(51) Int. Cl.: C08F 6/22

(54) **Process for isolating polymers of tetrafluoroethylene**
Verfahren zur Isolierung von Tetrafluorethylen-Polymere
Procédé d'isolation de polymères de tétrafluoréthylene

(30) Priority: 06.02.1995 US 384042; 31.01.1996 US 594567
(43) Date of publication of application: 08.11.2000
(62) Divisional of application: 96905357.8
(73) Proprietor: E.I. DU PONT DE NEMOURS AND COMPANY, Wilmington, DE 19810 (US)
(72) Inventor: Morgan, Richard Alan, Vienna, WV 26105-3014 (US)
(74) Representative: Matthews, Derek Peter

(56) References cited:
- EP-A- 0 480 391
- GB-A- 504 467
- GB-A- 1 102 342
- GB-A- 2 125 801
- DATABASE CHEMICAL ABSTRACTS [Online] STN; access number: 122: 240 795, XP002147515 & JP 06 263819 A (KURARAY CO.) 20 September 1994 (1994-09-20)

## Description

### FIELD OF THE INVENTION

This invention is in the field of fluoropolymers, particularly copolymers of tetrafluoroethylene and hexafluoropropylene.

### BACKGROUND OF THE INVENTION

Fluoropolymers, including homopolymers and copolymers of tetrafluoroethylene (TFE), collectively TFE polymers, are well known and widely used because of their unusual combination of chemical resistance. surface characteristics, dielectric properties, and high-temperature service capabilities. Depending on chemical composition, i.e.. the identity and proportion of monomer units in the polymer, a fluoropolymer may be partially crystalline or amorphous. plastic or elastomeric. Amorphous dipolymers of TFE and perfluorinated alkyl vinyl ethers are known to be elastomeric. with low glass transition temperatures (T_{g}), usually less than 10°C, desirably less than 0°C. More rigid amorphous fluoropolymers. having T_{g} at about room temperature or higher, are desired.

Certain copolymers of TFE and hexafluoropropylene (HFP) are known. For example, Bro & Sandt in U.S. Patent 2,946,763 disclose TFE/HFP copolymers with HFP content reflected by a specific infrared ratio. herein called HFP index or HFPI, in the range 1.5 to 6. They use a multiplier of 4.5 to convert HFPI to HFP content in wt%. There are frequent references in the literature to TFE/HFP copolymers having HFP content of from 6.75 to 27 wt%, apparently following the disclosure of the 1.5 to 6 HFPI range and 4.5 multiplier by Bro & Sandt. Recent workers in the field have refined their compositional calibrations of HFPI and now generally use multipliers in the range of 3.0-3.2 to convert HFPI to HFP content in wt%.

Morgan in U.S. Patent 5,266,639 discloses partially crystalline TFE/HFP copolymers having HFPI of 6.4 to about 9, made by a semi-batch dispersion polymerization process. Morgan teaches that a high concentration of surfactant can impede iolation of the copolymer resin and that surfactant concentration should be less than 0.4 wt%. preferably less than 0.2 wt%, based on the aqueous medium. Surfactant concentrations exemplified were in the preferred range.

Khan in U.S. Patent 4,381,384 discloses a continuous polymerization process for TFE polymers including copolymers containing up to 20 mol% of a variety of comonomers. For TFE/HFP copolymers, a multiplier of 2.1 was used to convert HFPI to HFP content in mol%, so that the limit of 20 mol% would correspond to an HFPI of 9.5. In the examples for TFE/HFP copolymers. HFP content of 5.4 mol% (HFPI of 2.57) was the highest level actually achieved. The continuous process of Khan in U.S. Patent 4,381,384 suffers from some disavantages, including a very high surfactant concentration that must be used to approach stable reactor operation and to enable discharge of the reaction mass without coagulation of the polymer in or in passing through the let-down valve. This high surfactant concentration can, in turn, make it extremely difficult to isolate the polymer from the dispersion. and can be undesirable in the isolated product. Space-time yield for Khan's low-HFP copolymer was of the order of only 0.1 kg/L·hr.

Khan discloses that TFE/HFP dipolymers having HFP content reflected by HFPI = 9.5 are partially crystalline, though HFP incorporation did not approach this level. Morgan discloses that such polymers having HFPI = 9 are crystalline, and did not achieve higher levels of HFP incorporation.

Eleuterio in U.S. Patent 3.062.793 describes amorphous copolymers. Such copolymers having HFPI values of about 17 and 22 are exemplified. Eleuterio also discloses a partially crystalline TFE/HFP copolymer having HFPI = 10.5 and 15% crystallinity. This level of crystallinity is surprisingly high for the HFPI value, which corresponds to HFP content of about 25 mol% as estimated from examples to follow, especially after melt pressing of the sample. However, Eleuterio's method of synthesis, with all of the TFE and HFP monomers present at the start of the polymerization reaction, would be expected to produce very nonuniform copolymers because HFP is much less reactive than TFE.

Although it is well-established commercial practice to make winter shipments of aqueous dispersions of TFE homopolymers and copolymers in insulated and/or heated trucks to prevent freeze damage, typically irreversible coagulation, no commercial utilization of a freezing process for isolation of TFE polymer resin from its polymerization medium is known. A freeze drying process. involving sublimation of the water from the frozen coagulate or dispersion, for fibrillatible, non-melt fabricable TFE polymer usually supplied as an agglomerate of dispersion particles (often called fine powder) is disclosed by Ocone in U.S. Patent 3,692,759. Furuya & Motoo in U.S. Patent 5,816,431 disclose a process for preparing a dispersion of raw materials for reaction layers of a gas permeable electrode comprising mixing carbon black, polytetrafluoroethylene, water and surfactant, freezing this mixture and then thawing out the mixture.

Polymers other than TFE polymers have been isolated by freeze-than methods, see e.g. GB-A-504467 and GB-A-2 125 801.

### SUMMARY OF THE INVENTION

The invention provides a process for isolating tetrafluoroethylene polymer resin from aqueous polymerization medium. This process comprises first freezing the dispersion, thawing the frozen dispersion, and then removing the liquid from the polymer solids. In a preferred embodiment of this process. the liquid of the thawed frozen dispersion is removed immediately from the polymer solids, this providing better results than if water removal is delayed. In another preferred embodiment of the isolation proces of this invention, thawing of the frozen dispersion, removal of the liquid from the thawed frozen dispersion, and washing of the polymer solids of the thawed frozen dispersion are carryied out simultaneously.

In another embodiment of the invention the freeze-than method is useful when batch polymerizing a fluoroolefins (tetrafluoroethylene and hexafluoropropylene) in an aqueous medium containing surfactant to produce an aqueous dispersion of the copolymer from these fluoroolefins, the surfactant being present in a concentration which is at least 1.5 times the critical micelle concentration of said surfactant.

It has been discovered that this polymerization process is advantageously applicable to the copolymerization of fluoromonomers to make partially crystalline melt-fabricable fluoropolymer, and this is another embodiment of the present invention. In this embodiment, the surfactant concentration can be as little as 1.2 times the critical micelle concentration. Typically, the fluoropolymer will contain repeat units derived from tetrafluoroethylene, and the amount of comonomer present during the copolymerization will be effective to impart melt-fabricability to the fluoropolymer while retaining at least some of the crystallinity characteristic of tetrafluoroethylene homopolymer. The freeze/thaw polymer isolation method described above is, of course, applicable for isolating the partially crystalline melt-fabricable fluoropolymer resin from the aqueous dispersion obtained in this embodiment.

### DETAILED DESCRIPTION OF THE INVENTION

Traditional techniques known in the art (see U.S. Patent 5.266.639. for example) for isolating polymer from the dispersion polymerization medium sometimes achieve incomplete recovery of Polymer solids from the medium of this invention. This is probably due to a combination of stabilizing effect of the surfactant in its high concentration and the small particle size characteristic of the product produced by the process. However, it has been discovered that essentially complete recovery of polymer solids from raw dispersion can be achieved by an isolation procedure comprising freezing of the dispersion, subsequent thawing of the frozen dispersion, and then separation of the polymer solids from the thawed frozen dispersion. It has also been discovered that the time between thawing and the removal of the liquid from the polymer solids of the thawed frozen dispersion affects the partitioning of the surfactant between the separated liquid and the recovered solids, with the amount of surfactant carried away by the liquid increasing as the time between thawing and liquid removal decreases. That is, immediate removal of the thawed liquid, or removal of the thawed liquid simultaneously with thawing of the frozen dispersion, causes more surfactant to be removed with the liquid, and less to remain with the polymer solids. The freeze-thaw isolation process is applicable to isolation of fluoropolymer solids from aqueous dispersion polymerization medium from processes producing polymers, including essentially amorphous TFE/HFP copolymers, and is particularly valuable for non-fibrillatible TFE polymers, including homopolymers and copolymers, produced by a dispersion polymerization process. The freeze-thaw isolation method of this invention can be supplemented with various procedures for washing polymer solids as known in the art. As will be shown by an example below, it is advantageous to thaw, remove the thawed liquid, and wash simultaneously. Simultaneous thawing of the frozen dispersion, removal of the liquid from the thawed frozen dispersion, and washing of the polymer solids of the thawed frozen dispersion is a preferred way of carrying out this part of the isolation process of this invention.

The freeze/thaw process of this invention for isolating fluoropolymer resin dispersion from aqueous medium offers additional advantages over prior art processes. As will be shown by examples to follow, apparent density of dried isolated resin can be high, flow of resin agglomerates can be improved, and surfactant used in polymerization can be more effectively separated from the resin. Preferred modes of carrying out the process enhance separation of surfactant from resin.

In carrying out the freeze/thaw process of this invention, practical considerations will influence the choice of operating details. Perhaps most significant are considerations relating to heat transfer. While the freezing step of the process can be carried out in bulk, as in freezing of a drum filled with dispersion, such a procedure would require a long time. To minimize the time required to freeze a body of dispersion, it is desirable for at least one dimension of the body of dispersion to be frozen, and hence of the body of the resultant frozen dispersion. to be small. e.g.. no more than about 3 mm. Thus, for example, the body can be a relatively thin flat film or sheet, or can have a relatively thin-walled cylindrical shape. Bodies of frozen dispersion having at least one small dimension also have the advantage of permitting rapid thawing, for the same heat transfer reasons. Many process designs can provide the advantageous condition of a body of dispersion having at least one small dimension. For example, a thin layer of aqueous dispersion can be placed in a flat tray for freezing, or chilled paddles can be dipped into aqueous dispersion until a layer of frozen dispersion forms on the paddle surfaces, or a chilled roll can be partially immersed in a reservoir of aqueous dispersion with the roll axis parallel to the surface of the dispersion and rotated at such speed to pick up a layer of frozen dispersion to be removed during the part of a revolution of the roll when the frozen dispersion is out of the reservoir, and the like.

The freeze-than method, as mentioned above, is useful in isolating amorphous TFE/HPP copolymers.

The TFE/HFP copolymers have up to 29 mol% of units derived from HFP and are amorphous. By this it is meant that the heat of fusion calculated from any endotherm detected in a differential scanning calorimetry (DSC) scan for as-polymerized resin is no more than about 3 J/g, preferably no more than about 1 J/g. Such endotherms, if actually present, are diffuse, difficult to detect, and calculated heat of fusion at these levels is subject to large relative error. Generally, no endotherm is seen in a second DSC heating even if a weak endotherm is detected for first heating.

The amorphous TFE/HFP copolymers can contain units derived from one or more additional fluoromonomers selected from fluorolefins having 4 to 8 carbon atoms and fluorovinylethers. Fluoroolefins having 4-8 carbon atoms include compounds such as perfluorobutyl ethylene and perfluoroolefins. Fluorovinylethers include the group of perfluoro(vinyl ethers) having the formula CF₂ = CFO(R'_{*f*}O)_{κ} R_{*f*}. wherein κ is 0-5. R'_{*f*} is linear or branched perfluoroalkylene of 2 to 6 carbon atoms. and R_{*f*} is perfluoroalkyl of 1 to 6 carbon atoms, examples of which are perfluoro(alkyl vinyl ether) (PAVE) corresponding to κ = 0. Preferred PAVE include perfluoro(methyl vinyl ether), perfluoro(ethyl vinyl ether) and perfluoro(propyl vinyl ether). Still additional examples of such fluoromonomer includes the functional fluorovinylethers, wherein the functionality is ester, alcohol, or acid. The ester-functional fluorovinylethers can be carboxylic ester or alcoholic ester. Examples of such fluorovinylethers include CF₂=CF[OCF₂CF(CF₃)]ₘ-O-(CF₂)ₙCH₂OH as disclosed in U.S. Patent 4,982,009 and the alcoholic ester CF₂=CF[OCF₂CF(CF₃)]ₘ-O-(CF₂)ₙ-(CH₂)ₚ-O-COR as disclosed in U.S. Patent 5,310,838. Additional fluorovinylethers include CF₂=CF[OCF₂CF(CF₃)]ₘO(CF₂)ₙCOOH and its carboxylic ester CF₂=CF[OCF₂CF(CF₃)]ₘO(CF₂)ₙCOOR disclosed in U.S. Patent 4,138,426. In these formulae, m = 0-3, n = 1-4, p = 1-2 and R is methyl or ethyl. Preferred such fluorovinylethers are CF₂=CFOCF₂CF(CF₃)O(CF₂)₂CH₂OH and CF₂=CFOCF₂CF(CF₃)O(CF₂)₂COOH. These fluorovinylethers are preferred either because of their availability or their ability to incorporate functionality into the resultant copolymer. Additional fluorovinylethers include alkyl fluorovinyl ethers such as disclosed in U.S. Patent 3,159,609. The additional comonomer does not prevent the incorporation of the high amount of HFP into the comonomer. Typically from 0.1 to 10 mol% of additional comonomer may be present, based on total monomer units in the resultant copolymer.

In one embodiment, a TFE/HFP copolymer that is amorphous as defined above will typically have HFP content of from 20 to 29 mol%, usually from 22 to 29 mol%. (Statements of copolymer composition in terms of comonomer content refer to units derived from said comonomer.) When such copolymer is dipolymer, this is in surprising contrast to Eleuterio's disclosure (U.S. Patent 3,062,793) of a dipolymer having HFPI = 10.5 and characterized by substantial crystallinity.

In another embodiment, a TFE/HFP copolymer of this invention that is amorphous as defined above also contains copolymerized units of at least one comonomer selected from fluoroolefins containing 4-8 carbon atoms and fluorovinylethers, said copolymer containing sufficient units of HFP and said comonomer combined to cause the copolymer to be amorphous, with HFP and additional comonomer being in such proportions that said copolymer has glass transition temperature of at least about 20°C, preferably at least 25°C, most preferably at least 35°C. This copolymer can also have HFP content of 20-29 mol%, but the presence of additional comonomer enables HFP to be present at less than 20 mol% while still obtaining amorphous copolymer.

The copolymers usually have melt viscosity (MV) in the range from I Pa·s to 10 × 10³ Pa·s. Although a high HFP, or HFP and other comomer, content is the primary requisite for an amorphous TFE/HFP copolymer, it appears that a low MV contributes to low heat of fusion. Thus, resins having lower comonomer content benefit from having a low MV to eliminate traces of crystallinity.

The amorphous TFE/HFP copolymer is characterized by uniform distribution of HFP units in the copolymer. This means that most of the HFP units present are isolated, i.e., have TFE units as neighbors, and only a minor part of the HFP units are present as diads (sequences of two HFP units) or triads (sequences of three HFP units). The fraction of HFP units in the polymer present as HFP diads and triads combined, determined as described below, is generally less than about 10%, preferably less than about 5%. Triads may not be detectable, indicating a high degree of uniformity for copolymers having high HFP content.

### EXAMPLES

Fluoropolymer compositions were determined by infrared spectroscopy on 0.025-0.051 mm thick films pressed at 300°C. For TFE/HFP copolymers. Fourier transform infrared spectroscopy was employed in the method described in U.S. Patent 4.380.618. In applying this method, the peak absorbances of bands found at about 10.18 µm and at about 4.25 µm were used, not the absorbances at these exact wavelengths unless they were also the peak absorbances. HFP content is expressed as an index HFPI, the ratio of the two peak absorbances.

The PAVE content of TFE copolymers was determined by FTIR spectroscopy on 0.095-0.105 mm thick films pressed at 350°C. PEVE was determined from an infrared band at 9.17 µm and was calculated in wt% as 1.3× the ratio of the 9.17 µm absorbance to 4.25 µm absorbance. PPVE was determined from an infrared band at 10.1 µm and was calculated in wt% as 0.97× the ratio of the 10.1 µm absorbance to 4.25 µm absorbance.

Melt viscosities of the fluoropolymers were determined by ASTM method D1238-52T modified as described in U.S. Patent 4.380.618, except that orifices having 0.031 inch (0.8 mm) or 0.062 inch (1.6 mm) diameter and weights of 833 g or 2160 g were used for samples having low MV.

Thermal characteristics of fluoropolymer resins were determined by DSC by the method of ASTM D-4591-87. As is conventional, melting temperature (Tₘ) was taken as the peak temperature of the melting endotherm. For measurements designed to yield a value for glass transition temperature (T_{g}), samples were cooled to 0°C before heating was started.

Average size of polymer particles as polymerized, i.e., raw dispersion particle size (RDPS), was measured by photon correlation spectroscopy.

HFP distribution in TFE/HFP copolymer was measured by ¹⁹F NMR using a Bruker AC 250 NMR unit operating at 235 MHz. Polymer samples as 3-5% (wt/vol) solutions in hexafluorobenzene were loaded in 5-mm NMR tubes and heated to 80°C in a narrow bore probe. Signals due to the tertiary fluorine of HFP units appear at -183.5 ppm for isolated HFP units, at -179.5 ppm for HFP units present as head-to-tail diads. and at -177 ppm for HFP units present as head-to-tail triads. It is uncertain whether or not the integration for the HFP triads at -177 ppm also includes oligomeric blocks larger than triads. The fractions of HFP units present as triads and diads were determined as the ratios, respectively, of the areas of the ¹⁹F NMR signals at -177 and -179.5 ppm to the total of the areas of the signals at -177, -179.5 and -183.5 ppm. The detection limit for triads is less than 1% of HFP units in the copolymer.

In the following, unless otherwise stated, stated solution concentrations are based on combined weight of solvent water and of solute(s). Stated concentrations of polymer solids in dispersions are based on combined weights of solids and aqueous medium, and were determined gravimetrically, i.e.. by weighing dispersion, drying, and weighing dried solids, or by an established correlation of dispersion specific gravity with the gravimetric method.

### Example 1

A cylindrical, horizontally disposed, water-jacketed, paddle-stirred, stainless steel reactor having a length to diameter ratio of about 1.5 and a water capacity of 79 parts by weight was charged with 52.5 parts of demineralized water. The reactor was heated to 65°C, evacuated, purged with TFE, and then evacuated again. The vacuum in the reactor was then used to draw in a solution of 0.214 part of ZONYL® TBS surfactant in water (1.7 parts). The solution was rinsed into the reactor with another 0.88 part of water. The reactor was then sealed, agitation was begun at 40 rpm. and the reactor temperature was raised to 103°C. After the temperature had become steady at 103°C, HFP was added slowly to the reactor until the pressure was 425 psig (3.0 MPa). Then TFE was added to the reactor to achieve a final pressure of 625 psig (4.4 MPa). Then 0.66 part of a freshly prepared aqueous initiator solution containing 0.6 wt% of ammonium persulfate (APS) and 0.7 wt% of potassium persulfate (KPS) was pumped into the reactor at 0.055 part/minute. The agitator speed was reduced to 38 rpm and held constant for the remainder of the batch. Thereafter, the same initiator solution was pumped into the reactor at 0.026 part/minute for the remainder of the polymerization. After polymerization had begun as indicated by a 10 psig (0.07 MPa) drop in reactor pressure. additional TFE was added to the reactor to maintain pressure constant at 625 psig until a total of 18.2 parts of TFE had been added to the reactor after kickoff (87 minutes). The TFE feed was then stopped and the reactor was cooled with the initiator feed continuing and the agitator still running. When the temperature of the reactor contents reached 90°C, initiator pumping and agitation were stopped and the reactor was vented. After venting to nearly atmospheric pressure, the reactor was purged with nitrogen to remove residual monomer. The dispersion, which was bluish and translucent, was then discharged from the reactor and saved. Solids content was 31.5 wt% and RDPS was 0.029 µm. Then, 2.0 parts of the dispersion were blended with 1.5 parts of demineralized water and 0.0 1 part of concentrated nitric acid and coagulated by vigorous stirring. The wet polymer which resulted from the coagulation was compressed to remove a portion of the water and then dried in a circulating air oven at 150°C. The TFE/HFP copolymer resin had an MV of 3.7 × 10³ Pa·s, an HFPI of 4.45, and an apparent density of 400 g/L. The resin was partially-crystalline as indicated by a Tₘ of 244°C and a heat of fusion of 21.4 J/g. Copolymer resin isolated from a separate portion of the dispersion by freezing and thawing had apparent density of 630 g/L, was free-flowing, and was noticably less dusty than the sample isolated by chemical and mechanical coagulation. The polymerization rate. expressed as parts of polymer produced per reactor volume (parts) per hour, was 0.22.

### Example 2

A polymerization was carried out similarily to Example 1 except that the initial water charge was 50.2 parts, the surfactant was 0.06 part of ammonium perfluorocaprylate (C-8) and was precharged with the water, the HFP addition was made to a pressure of 450 psig (3.2 MPa) and the agitator speed was turned on at 42 rpm after precharging water and surfactant and then reduced to 40 rpm after the first initiator addition. The product dispersion was milky and opaque, and RDPS was 0.216 µm. Isolation of the resin from the dispersion was carried out identically to the Example 1 dispersion except that only 0.07 part of nitric acid was added. The product resin had an MV of 7.4 × 10³ Pa·s, an HFPI of 4.13. a Tₘ of 254°C with heat of fusion of 24.8 J/g, and an apparent density of 360 g/L. Copolymer resin isolated from a separate portion of the dispersion by freezing and thawing had apparent density of 600 g/L, was free-flowing, and was noticably less dusty than the sample isolated by chemical/mechanical coagulation. The polymerization rate was 0.10 part/part-volume/hour, less than half that of Example 1.

### Example 3

A reactor similar to that described in Example 1 but with a water capacity of 8.2 parts by weight was charged with 4.44 parts of demineralized water. The reactor was heated to 65°C, evacuated and purged with TFE, and then left with a partial vacuum. The vacuum in the reactor was then used to draw in a solution of 0.044 part of Surflon® S 11 1 (ammonium perfluorononanoate, Asahi Glass) dissolved in 0.26 part of demineralized water. The solution was rinsed into the reactor with another 0.088 part of demineralized water. The reactor was then sealed, agitation was begun at 82 rpm and the temperature was raised to 95°C. After the temperature had become steady at 95°C, the reactor was pressurized to 510 psig (3.6 MPa) with HFP. The temperature was then raised to 103°C. The pressure was then 558 psig (3.9 MPa) after the temperature had become steady. The reactor pressure was then increased to 625 psig (4.4 MPa) by the addition of TFE. Then 0.066 part of a freshly prepared aqueous solution containing 2.5 wt% APS was pumped into the reactor at 0.011 part/minute. Thereafter, the same initiator solution was pumped to the reactor at 0.002 part/minute for the remainder of the polymerization. No additional TFE was added for 20 min after pressureup to 625 psig. During that time, the reactor pressure dropped to 594 psig (4.2 MPa) indicating that polymerization had begun. The pressure was then brought back to 625 psig and maintained at that level for the remainder of the polymerization by the addition of TFE. The agitator speed was held constant at 82 rpm. After 1.4 parts of TFE had been added after the initial pressureup (213 min), the TFE feed was stopped and full cooling was applied to the reactor. When the temperature of the reactor contents had dropped to 90°C, the agitator was turned off and the reactor was vented. When the pressure had dropped to 1-2 psig (0.11-0.12 MPa), evacuation and initiator addition were stopped and nitrogen was added to the reactor to give a slow pressure rise. When the pressure reached 5 psig (0.14 MPa), the vacuum port was opened for one minute while maintaining the nitrogen purge. The dispersion, which was water-clear and quite stable, was then discharged from the reactor and saved. Solids content was 29.9 wt% and RDPS was 0.071 µm.

Approximately 800 g of the product dispersion was poured into a plastic bottle and then placed in a freezer at -20°C for three days. The bottle of dispersion was then thawed out in a bucket of warm water and the polymer phase which had separated was collected on a filter. The filtrate was found to contain 0.56% solids which consisted of polymer. residual surfactant, and initiator salts. The polymer was washed three times with demineralized water and then a portion of that polymer was washed three times with isopropanol (IPA). Both samples were then dried in a 55°C vacuum oven under reduced pressure with a nitrogen purge for two days. The melt viscosities of both samples were found to be 90 Pa·s, and HFPI was 10.1 for the IPA-washed sample. DSC analysis showed a glass transition at about 45°C and a broad, weak endotherm at about 88°C. with a heat of fusion of 1.0 J/g. NMR analysis indicated HFP content was 23.3 mol% and that 2.0% of HFP units in the copolymer were in diads. No triads were detected.

### Example 4

The polymerization procedure described for Example 3 was followed with the following differences: 1) The initial water charge was 4.63 parts. 2) The surfactant employed was 0.021 part of Zonyl® TBS in 0.166 part of demineralized water. 3) Also added with the surfactant was 0.0033 part of chloroform as a chain-transfer-agent. 4) The pressure in the reactor after HFP addition and raising of the temperature to 103°C was 552 psig (3.9 MPa). 5) The pressure after TFE addition and that maintained during polymerization was 600 psig (4.2 MPa). 6) Agitation was at 90 rpm. 7) The first initiator addition was 0.066 part of a 2.5 wt% APS aqueous solution pumped at 0.011 part/min. 8) Subsequent initiator ddition was the same solution pumped at 0.0022 part/min. And 9) the amount of TFE added after initial pressureup was 0.51 part. The reaction time after resumption of TFE feed was 345 min. The product dispersion contained 14.4 wt% solids and was water clear. RDPS was 0.096 µm. The freeze/thaw isolation procedure described for Example 3 was employed with this dispersion. The TFE/HFP copolymer resin melt viscosity was less than 10 Pa·s and the HFPI was 11.2. DSC analysis showed a glass transition near 45°C, but no indication of a melting endotherm. NMR analysis indicated that HFP content was 27.2 mol% and that 2.4% of HFP units in the copolymer were in diads. No triads were detected.

### Example 5

The reactor described in Example 1 was charged with 49 parts of demineralized water and 0.022 part of ammonium perfluorocaprylate (C-8) dissolved in 0.088 part demineralized water. The reactor was pressure tested at 380 psig (2.7 MPa) and 90°C while agitating at 46 rpm. It was then cooled to reduce the temperature of its contents below 30°C. The reactor was then evaucated and purged three times with TFE monomer, leaving a reduced pressure on the reactor after the final evacuation. A valve was then opened to slowly release ethane into the reactor until the pressure was raised by 20 inches of mercury (0.067 MPa). The valve was then closed and the reactor temperature was raised to 90°C with the agitator running at 46 rpm. After the temperature reached 90°C, the reactor was pressurized with TFE to a pressure of 380 psig. A freshly prepared aqueous solution (1.82 parts) of 0.25 wt% APS and 1.25 wt% methanol was then pumped to the reactor at 0.20 5 part/minute. After polymerization began as indicated by a 10 psig (0.07 MPa) drop in reactor pressure, additional TFE was added to the reactor at a rate so as to maintain the pressure at 380 psig. After three parts of TFE had been added to the reactor after kickoff, 2.0 parts of a 2.7 wt% solution of C-8 in demineralized water was pumped into the reactor at a rate of 0.2 part/minute. After 15 parts of TFE addition, 0.66 part of an aqueous solution of APS (0.09 wt%) and methanol (0.45 wt%) was pumped into the reactor at a rate of 0.11 part/minute. When 22 parts of TFE had been added to the reactor, the TFE feed was stopped but the reaction continued until the reactor pressure dropped to 190 psig (1.4 MPa). The reactor was then vented and the product dispersion was removed. The dispersion contained about 34 wt% PTFE resin particles which had a melt viscosity of 2.6 × 10³ Pa·s as determined by the procedure normally used for TFE copolymers.

One portion of the dispersion was diluted with demineralized water to 23.3 wt% solids, and 1.0 wt% ammonium carbonate (based on weight of polymer) was added. This dispersion was then coagulated by the application of vigorous stirring. The effluent water contained 9 ppm of the C-8 surfactant which had been added to the polymerization.

Separate portions of the dispersion were frozen. Two portions were thawed as described in previous examples, and the thawed frozen dispersions were filtered at different times after thawing. Filtrate collected at 89 hr after thawing contained 237 ppm of C-8, and filtrate collected at 17 hr after thawing contained 325 ppm of C-8. A third portion of frozen dispersion was placed on a filter and the liquid from the thawed frozen dispersion was collected as thawing took place. This filtrate contained 477 ppm of C-8. These results. compared with the result from chemical coagulation above, show that the freeze/thaw isolation technique removes more of the surfactant from the polymer, and that the amount of the surfactant carried away by the liquid increases as the time between thawing and liquid removal decreases.

Another portion of the dispersion was frozen. and the frozen dispersion was broken up into fine particles which were mixed well. Portions of the finely divided frozen dispersion were placed on two different filters at a bed depth of about 0.625 inch (1.6 cm). One portion was thawed as above. The liquid from the thawed frozen dispersion contained 496 ppm of C-8, in close agreement with the first test. After thawing was complete, the PTFE resin was washed three times with warm water (40°-45°C), dried for three days at 55°C in a vacuum oven, and analyzed for C-8 residue. C-8 residue was 782 ppm based on the weight of PTFE resin. The second portion was thawed and washed simultaneously, with three warm water washings. The PTFE resin so obtained was dried as above and was analyzed to have only 376 ppm of C-8 residue, showing the benefit of simultaneous thawing, washing and removal of liquid from thawed frozen dispersion.

### Example 6

The reactor of Example 1 was charged with 48.0 parts of demineralized water. The reactor was heated to 65°C, evacuated. purged with TFE, and then evacuated again. The vacuum in the reactor was then used to draw in 0.079 part of chloroform and a solution of 0.22 part of perfluorohexyl ethane sulfonic acid surfactant in water (1.7 parts). The solution was rinsed into the reactor with another 0.88 part of water. Thus, the surfactant concentration was approximately 0.010 mol/L, i.e., above the critical micelle concentration (about 0.003 mol/L). The reactor was then sealed, agitation was begun at 42 rpm, and the reactor temperature was raised to 103°C. After the temperature had become steady at 103°C, HFP was added slowly to the reactor until the pressure was 350 psig (2.5 MPa). The pressure in the reactor was then increased to 600 psig (4.2 MPa) by the addition of TFE, and then 0.43 part of perfluoro(ethyl vinyl ether) (PEVE) was pumped into the reactor at a rate of 0. 165 part/min. Then 1.10 parts of a freshly prepared aqueous initiator solution containing 0.4 wt% of APS were pumped into the reactor at 0.11 part/min. Thereafter, the same initiator solution was pumped into the reactor at 0.0066 part/min for the remainder of the polymerization. After polymerization had begun as indicated by a 10 psig (0.07 MPa) drop in reactor pressure, additional TFE was added to the reactor to maintain pressure constant at 600 psig. The agitator speed was used to control TFE mass transfer into the aqueous phase so that the TFE addition rate was about 0.1 part/min. The average agitator speed required to maintain the target TFE transfer rate was 33.6 rpm. When a total of 18.0 parts of TFE had been added to the reactor after kickoff (180 min), the TFE feed was stopped. When the reactor contents had cooled to 90°C, initiator pumping and agitation were stopped and the reactor was vented. After venting to nearly atmospheric pressure, the reactor was purged with nitrogen to remove residual monomer. The dispersion was then discharged from the reactor and saved. Solids content was 31.5 wt% and RDPS was 0.094 µm. A portion of the dispersion was poured into a plastic bottle which was then placed in a freezer at -20°C overnight. The bottle of dispersion was then thawed out in a bucket of warm water and the polymer phase which separated was collected on a filter. The filtrate liquid was found to contain only 0.09% solids. The polymer was washed on the filter three times with a volume of demineralized water equivalent to 75% of the original dispersion portion volume and then was washed three times with similar amounts of isopropyl alcohol. Much of each wash liquid was removed by application of a vacuum to the bottom of the filter. The polymer was then dried in a circulating air oven at 150°C. The dried partially-crystalline TFE copolymer resin had an MV of 1.3 × 10³ Pa·s, an HFPI of 2.04. a Tₘ of 281°C with heat of fusion of 33.3 J/g, and contained 1.4 wt% of PEVE.

### Example 7

The polymerization procedure of Example 1 was essentially repeated except that the initial charge of demineralized water was 50.0 parts, the surfactant was Surflon® S111 and its amount was 0.22 part. and the agitator speed was held constant at 40 rpm throughout. Thus. the surfactant concentration was approximately 0.009 mol/L, i.e.. above the critical micelle concentration (about 0.003 mol/L). The reaction time after kickoff was 90 min. The resultant dispersion contained 30.3 wt% solids and had RDPS of 0.139 µm. A portion of the dispersion was subjected essentially to the freeze-thaw isolation procedure of Example 6. The filtrate liquid was found to contain only 0.14% solids. The dried partially-crystalline TFE copolymer resin had an MV of 6.6 × 10³ Pa·s, an HFPI of 3.84, and a Tₘ of 259°C with heat of fusion of 25.3 J/g. These results show that the polymerization process of this invention, utilizing a surfactant concentration above the critical micelle concentration, yields a partially-crystalline non-elastomeric polymer having higher HFP incorporation at higher polymerization rate.

### Example 8

The reactor used in Example 3 was charged with 4.85 part of demineralized water, 0.012 parts of Surflon® S 111 (0.0051 mol/L), and 0.0066 part of concentrated ammonium hydroxide. After pressure-testing the reactor at 80°C with 300 psig (2.2 MPa) nitrogen, the reactor was cooled to 30°C and it was then alternately evacuated and purged with TFE three times. The reactor was then left under a vacuum. Ethane was then fed to the reactor until the pressure rose by 10 Pa. The reactor was then sealed, agitation was begun at 110 rpm. and the reactor temperature was raised to 80°C. The reactor was pressured to 300 psig with TFE and then 0.074 part of PPVE) was pumped into the reactor. Five minutes after completion of PPVE addition. 0.66 part of an aqueous solution of 0.25 wt% percent APS was pumped into the reactor at 0.066 part/min. Thereafter. an aqueous solution of 0.10 wt% APS was pumped to the reactor at 0.0022 part/min for the remainder of the polymerization. After polymerization had begun. PPVE was added to the reactor at a rate of 0.00047 part/min for the remainder of the polymerization. The reactor pressure was maintained at 300 psig by the addition of TFE and the agitator speed was varied to control the reaction rate so that the TFE addition rate was 0.014 part/min. After 1.96 parts of TFE had been added after the initial pressureup, the TFE, PPVE, and initiator feeds were stopped and full cooling was applied to the reactor. The agitator was turned off and the reactor was vented. When the pressure had dropped to 1-2 psig (0.11-0.12 MPa), nitrogen was added to the reactor to give a slow pressure rise. When the pressure reached 5 psig (0.14 MPa), the vacuum was applied for one minute while maintaining the nitrogen purge. The dispersion was then discharged from the reactor and saved. Solids content was 26.6 wt% and RDPS was 0.114 µm. The average agitator speed during polymerization was 99.2 rpm. A portion of the dispersion was subjected essentially to the freeze-thaw isolation procedure of Example 6, except that the alcohol wash was omitted. The filtrate liquid was found to contain only 0.03% solids which consisted of polymer, residual surfactant, and initiator salts. The dried partially-crystalline TFE copolymer resin had an MV of 1.4 × 10² Pa·s, a Tₘ of 308°C with heat of fusion of 45.2 J/g, and contained 4.03 wt% PPVE. These results show that the polymerization process of this invention, utilizing a surfactant concentration above the critical micelle concentration, yields a partially-crystalline non-elastomeric polymer having higher PPVE incorporation.

## Claims

1. A process for isolating tetrafluoroethylene polymer resin from aqueous dispersion produced by dispersion polymerization, comprising first freezing said dispersion to form frozen dispersion, then thawing said frozen dispersion to form thawed frozen dispersion, and then separating said resin from liquid of said thawed frozen dispersion.

2. The process of Claim 1, wherein said liquid is removed from said polymer resin immediately after said frozen dispersion becomes said thawed frozen dispersion.

3. The process of Claim 1, wherein said liquid is removed simultaneously with said thawing and with washing of said resin.

4. The process of Claim 1, wherein said freezing is done by rotating a chilled roll in said dispersion to form a layer of said frozen dispersion on the surface of said roll, and wherein said layer is scraped from said surface of said roll before said surface re-enters said dispersion.

## Revendications

1. Procédé d'isolation de résine de polymère de tétrafluoroéthylène à partir d'une dispersion aqueuse produite par polymérisation en dispersion, comprenant d'abord la congélation de ladite dispersion pour former une dispersion congelée, ensuite la décongélation de ladite dispersion congelée pour former une dispersion congelée décongelée et ensuite la séparation de ladite résine du liquide de ladite dispersion congelée décongelée.

2. Procédé selon la revendication 1 dans lequel ledit liquide est séparé de ladite résine de polymère immédiatement après transformation de ladite dispersion congelée en ladite dispersion congelée décongelée.

3. Procédé selon la revendication 1 dans lequel ledit liquide est séparé simultanément avec ladite décongélation et avec un lavage de ladite résine.

4. Procédé selon la revendication 1 dans lequel ladite congélation est effectuée par rotation d'un cylindre refroidi dans ladite dispersion pour former une couche de ladite dispersion congelée sur la surface dudit cylindre et dans lequel ladite couche est grattée de ladite surface dudit cylindre avant que ladite surface n'entre de nouveau dans ladite dispersion.

## Patentansprüche

1. Verfahren zum Abtrennen von Tetrafluorethylen-Polymerharz aus wässriger Dispersion, die durch Dispersionspolymerisation erzeugt wurde, umfassend:
zuerst Gefrieren der Dispersion, um eine gefrorene Dispersion zu erzeugen;
anschließend Auftauen der gefrorenen Dispersion, um eine aufgetaute gefrorene Dispersion zu erzeugen und
anschließend Abtrennen des Harzes aus der Flüssigkeit der aufgetauten gefrorenen Dispersion.

2. Verfahren nach Anspruch 1, bei welchem die Flüssigkeit von dem Polymerharz entfernt wird, unmittelbar nachdem die gefrorene Dispersion zu der aufgetauten gefrorenen Dispersion geworden ist.

3. Verfahren nach Anspruch 1, bei welchem die Flüssigkeit gleichzeitig mit dem Auftauen und mit Waschen des Harzes entfernt wird.

4. Verfahren nach Anspruch 1, bei welchem das Gefrieren ausgeführt wird, indem eine gekühlte Walze in der Dispersion rotiert wird, um eine Schicht der gefrorenen Dispersion auf der Oberfläche der Walze zu erzeugen und wobei die Schicht von der Oberfläche der Walze abgekratzt wird, bevor die Oberfläche in die Dispersion wieder eintritt.
